(19) Europäisches Patentamt
European Patent Office
Office européen des brevets

(11) **EP 3 420 226 B1**

(12) **EUROPÄISCHE PATENTSCHRIFT**

(45) Veröffentlichungstag und Bekanntmachung des Hinweises auf die Patenterteilung:
**04.12.2019 Patentblatt 2019/49**

(21) Anmeldenummer: **17707007.5**

(22) Anmeldetag: **24.02.2017**

(51) Int Cl.:
**F03D 17/00** *(2016.01)*   **F03D 7/02** *(2006.01)*

(86) Internationale Anmeldenummer:
**PCT/EP2017/054265**

(87) Internationale Veröffentlichungsnummer:
**WO 2017/144631 (31.08.2017 Gazette 2017/35)**

(54) **VERFAHREN ZUM BESTIMMEN EINER ÄQUIVALENTEN WINDGESCHWINDIGKEIT**

METHOD FOR DETERMINING AN EQUIVALENT WIND VELOCITY

PROCÉDÉ POUR DÉTERMINER UNE VITESSE DU VENT ÉQUIVALENTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.02.2016 DE 102016103254**

(43) Veröffentlichungstag der Anmeldung:
**02.01.2019 Patentblatt 2019/01**

(73) Patentinhaber: **Wobben Properties GmbH**
**26607 Aurich (DE)**

(72) Erfinder: **ENGELKEN, Sönke**
**28209 Bremen (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**DE-A1-102010 014 165**

EP 3 420 226 B1

**Beschreibung**

Die vorliegende Erfindung betrifft ein Verfahren zum Bestimmen einer äquivalenten Windgeschwindigkeit einer Rotorblattebene einer Windenergieanlage. Außerdem betrifft die vorliegende Erfindung eine Windenergieanlage, die zum Erfassen einer äquivalenten Windgeschwindigkeit einer Rotorblattebene vorbereitet ist und sie betrifft einen Windpark.

Windenergieanlagen sind bekannt und weisen üblicherweise eines, meist mehrere, Rotorblätter auf, die sich um eine Rotorachse drehen und dabei eine Rotorfläche, also eine Kreisfläche, überstreichen. Da eine Windenergieanlage Energie, letztlich elektrischen Strom, aus dem Wind erzeugt, ist der Wind und damit seine Windgeschwindigkeit für die Windenergieanlage von wichtiger Bedeutung.

In einem normalen, regulären Betrieb kann eine Windenergieanlage ohne Erfassung der Windgeschwindigkeit auskommen, indem sie beispielsweise in Abhängigkeit der Rotordrehzahl des die Rotorblätter aufweisenden aerodynamischen Rotors eine Leistung beispielsweise abhängig einer vorgegebenen Drehzahl-/Leistungskennlinie einstellt.

Es gibt nun aber zunehmend Situationen, in denen eine Kenntnis über eine Windgeschwindigkeit benötigt wird oder zumindest hilfreich sein kann. Dazu gehört eine Situation, in der die Windenergieanlage beispielsweise zur Stützung des elektrischen Versorgungsnetzes in ihrer Leistung heruntergeregelt werden muss. Hierfür können verschiedene Gründe vorliegen, wie bspw. der Bedarf, Regelleistung zur Frequenzstützung in einem elektrischen Versorgungsnetz bereitzustellen. In diesem Fall liefert die Windenergieanlage also weniger Leistung beziehungsweise Energie in das elektrische Versorgungsnetz als sie aufgrund der vorherrschenden Windverhältnisse könnte. Häufig entsteht in solchen Fällen ein Vergütungsanspruch über die Leistung, die in das elektrische Versorgungsnetz, das vereinfacht auch nur als Netz bezeichnet werden kann, hätte eingespeist werden können, aufgrund der genannten Reduzierung aber nicht eingespeist werden durfte. Um diesen Vergütungsanspruch korrekt beziffern zu können, ist interessant, wie viel Windleistung tatsächlich vorhanden wäre. Neben der Berechnung der Vergütung kann insbesondere bei einer Reduzierung der Einspeiseleistung zur Erbringung von Regelleistung auch eine genaue Bezifferung der Leistungsreduzierung eine Voraussetzung für die Zulassung einer Windenergieanlage oder eines Windparks zur Erbringung dieser Dienstleistung sein.

Früher ist als Basis für die Berechnung der Vergütung auf Grund einer Abregelung der Windenergieanlage der Einfachheit halber der letzte Wert der Einspeisung zugrunde gelegt worden, der noch ohne Reduzierung eingespeist wurde. Je nach Dauer des Zeitraums, in dem reduziert werden muss, ist das aber eine ungenaue oder sogar untaugliche Grundlage. Eine dazu verbesserte Möglichkeit besteht darin, die Windgeschwindigkeit zu messen, zum Beispiel durch ein üblicherweise vorhandenes Gondelanemometer, um daraus über die Kenntnis der Eigenschaften der Windenergieanlage zu berechnen, wie viel Leistung hätte eingespeist werden können. Problematisch ist hierbei, dass eine solche Windmessung vergleichsweise ungenau ist. Je nach Windgeschwindigkeit und auch Böigkeit des Windes kann diese Ungenauigkeit erheblich sein. Hinzu kommt, dass die Windgeschwindigkeit auch nicht über die Rotorblattebene konstant ist. Besonders mit der Höhe können sich auch die Werte der Windgeschwindigkeit ändern.

Solche Abweichungen der Windgeschwindigkeit beziehungsweise Abweichungen von einer äquivalenten Windgeschwindigkeit, die nämlich besonders einer entsprechenden Leistungsproduktion beziehungsweise möglichen Leistungsproduktion der betreffenden Windenergieanlage zugeordnet werden kann, sind zumindest dem Grunde nach bekannt. Diese Ungenauigkeiten haben auch entsprechende Auswirkungen auf eine Leistungsbestimmung, die auf diesen ungenauen Werten beruht. In gewissen Grenzen kann es möglich sein, solche Auswirkungen zum Beispiel durch Korrekturwerte wie beispielsweise Korrekturfaktoren zu kompensieren. Solche Korrekturen beruhen dann allerdings auf Erfahrungswerten und können somit systembedingt Unzulänglichkeiten der Windgeschwindigkeitserfassung nur bedingt ausgleichen.

Im Ergebnis bleibt es somit schwierig, eine solche erzeugbare Leistung, die ohne Reduzierung des Betriebs der Anlage erzeugbar wäre, mit guter Genauigkeit zu bestimmen. Besonders bei starker Abregelung ist eine solche Leistungsbestimmung recht ungenau, würde aber gerade dort besonders genau benötigt, weil eine entsprechend hohe Vergütung wegen der starken Abregelung zu berechnen sein kann.

Das Deutsche Patent- und Markenamt hat in der Prioritätsanmeldung zu vorliegender Anmeldung folgenden Stand der Technik recherchiert: US 2011/0204635 A1. Ein anderes Dokument aus dem Stand der Technik ist DE 102010014165 A1.

Der Erfindung liegt somit die Aufgabe zugrunde, zumindest eines der oben genannten Probleme zu adressieren. Insbesondere soll eine Lösung geschaffen werden, eine mögliche, erzeugbare Leistung möglichst genau, insbesondere genauer als im Stand der Technik bekannt, zu bestimmen. Zumindest soll gegenüber bisher Bekanntem eine alternative Lösung vorgeschlagen werden.

Erfindungsgemäß wird ein Verfahren nach Anspruch 1 vorgeschlagen.

Es betrifft das Bestimmen einer äquivalenten Windgeschwindigkeit einer Rotorblattebene einer Windenergieanlage, die einen Rotor mit in ihrem Blattwinkel verstellbaren Rotorblättern aufweist. Die Rotorblattebene, die auch als Rotorebene bezeichnet werden kann, ist diejenige Ebene, die von den Rotorblättern beim Betrieb der Windenergieanlage überstrichen wird. Es wird hierbei eine Windgeschwindigkeit bestimmt, die einer Windgeschwindigkeit entspricht, bei der der Wind gleichmäßig und im Wesentlichen senkrecht auf die gesamte Rotorblattebene wirkt. Das wird hier als äquivalente Windgeschwindigkeit der Rotorblattebene bezeichnet.

Dazu wird in einem ersten Schritt eine elektrische in der Windenergieanlage verfügbare interne Leistung bestimmt. Das ist eine momentane Leistung, die in dem jeweiligen Moment als elektrische Leistung zur Verfügung steht, besonders in einem Gleichspannungszwischenkreis. Diese elektrische in der Windenergieanlage verfügbare interne Leistung, die nachfolgend auch vereinfachend als interne Leistung oder verfügbare interne Leistung bezeichnet wird, wird dabei in Abhängigkeit einer erfassten elektrischen Leistung und einer erfassten Drehzahl des Rotors bestimmt. Insofern wird auch die erfasste elektrische Leistung nicht unmittelbar als die elektrische in der Windenergieanlage verfügbare interne Leistung verwendet, sondern es wird aus der erfassten elektrischen Leistung und unter weiterer Berücksichtigung der erfassten Drehzahl des Rotors die verfügbare interne Leistung bestimmt.

Zumindest als vereinfachende Veranschaulichung kann angenommen werden, dass in einem idealen stationären Zustand die verfügbare interne Leistung der erfassten elektrischen Leistung entspricht. Besonders entspricht vorzugsweise die erfasste elektrische Leistung der in den Gleichstromzwischenkreis eines Wechselrichters eingespeisten elektrischen Leistung, wenn ein Vollumrichterkonzept vorliegt. Und hierbei entspricht die verfügbare interne Leistung der verfügbaren elektrischen Leistung, bezogen auf den Gleichspannungszwischenkreis. In einem idealisiert angenommenen stationären Zustand, so besonders bei konstanter Drehzahl des Rotors, können sich diese beiden Leistungen entsprechen. Tatsächlich liegt ein solcher idealisierter Zustand praktisch nie vor, könnte allenfalls gelegentlich vereinfachend angenommen werden. In der Realität schwankt die Windgeschwindigkeit aber im Grunde ununterbrochen und entsprechend auch die Leistung, die tatsächlich verfügbar wäre, also die verfügbare interne Leistung. Dies kann über die Drehzahl berücksichtigt werden, und entsprechend wird vorgeschlagen, die verfügbare interne Leistung in Abhängigkeit der erfassten elektrischen Leistung und der erfassten Drehzahl des Rotors zu bestimmen. Rein vorsorglich wird darauf hingewiesen, dass im Falle einer getriebebehafteten Windenergieanlage eine entsprechende Umrechnung von der Drehzahl des aerodynamischen Rotors auf die Drehzahl des Rotors des Generators vorgenommen werden kann. Welche der beiden Drehzahlen verwendet wird, ist dann eine Frage der Parametrierung. Im Falle der Verwendung einer modernen getriebelosen Windenergieanlage können solche Betrachtungen entfallen.

Jedenfalls wird dann die äquivalente Windgeschwindigkeit in Abhängigkeit dieser bestimmten verfügbaren internen Leistung und in Abhängigkeit der erfassten Drehzahl bestimmt. Für diese Bestimmung der äquivalenten Windgeschwindigkeit wird somit die soeben bestimmte verfügbare interne Leistung berücksichtigt als auch die erfasste Drehzahl. Besonders die Drehzahl geht somit unmittelbar in diese Bestimmung der äquivalenten Windgeschwindigkeit ein, und diese Abhängigkeit der erfassten Drehzahl betrifft nicht eine indirekte Abhängigkeit dadurch, dass schon die interne Leistung in Abhängigkeit der erfassten Drehzahl bestimmt wurde. Die erfasste Drehzahl wird also für die Bestimmung der äquivalenten Windgeschwindigkeit nochmals berücksichtigt.

Vorzugsweise werden dazu auch Generatorverluste des Generators der Windenergieanlage berücksichtigt. Insbesondere werden solche Generatorverluste der bestimmten verfügbaren internen Leistung hinzuaddiert. Diese Summe entspricht somit einer Generatoreingangsleistung. Mit anderen Worten wird hierbei beim Bestimmen der verfügbaren internen Leistung die Generatoreingangsleistung abzüglich Generatorverlusten, also abzüglich Generatorverlustleistungen, bestimmt. Diese Generatorverluste werden nun rechnerisch aufaddiert, um diese Generatoreingangsleistung rechnerisch zu erhalten. Neben den Generatorverlusten können auch weitere Verluste, die bei der Umwandlung von aerodynamischer Energie in elektrische Energie, insbesondere der elektrischen Energie in der Form, wie sie an der hier verwendeten Messstelle vorliegt, auftreten, mit berücksichtigt werden. Dies können zum Beispiel Reibungsverluste des mechanischen Antriebsstrangs inklusive des Getriebes sowie elektrische Verluste bei der Wandlung von Wechsel- auf Gleichstrom sein. Bei einer modernen, getriebelosen Windenergieanlage sind allerdings letztere Verluste häufig vernachlässigbar, so dass weiterhin vereinfachend von Generatorverlusten gesprochen wird.

Außerdem oder alternativ wird in diesem Schritt zur Bestimmung der äquivalenten Windgeschwindigkeit wenigstens ein Blattwinkel eines Rotorblatts berücksichtigt. Im einfachen, verallgemeinerten Fall, der häufig ausreichend ist, werden die Rotorblätter synchron verstellt, sodass alle Rotorblätter des Rotors den gleichen Blattwinkel aufweisen. Dieser eine Blattwinkel kann dann verwendet werden. Werden die Blattwinkel mehrerer Rotorblätter individuell verstellt, so kann eine Berücksichtigung so erfolgen, dass jeweils ein arithmetischer Mittelwert aller Blattwinkel verwendet wird.

Es kann dann in diesem Schritt zum Bestimmen der äquivalenten Windgeschwindigkeit eine Berücksichtigung der Generatoreingangsleistung, also die Summe aus verfügbarer interner Leistung und Generatorverlusten, die Rotordrehzahl und der Blattwinkel zur Bestimmung der äquivalenten Windgeschwindigkeit verwendet werden. Besonders der Blattwinkel beeinflusst auch die Menge der aus dem Wind entnommenen oder entnehmbaren Leistung und fließt daher in die Bestimmung der äquivalenten Windgeschwindigkeit ein. Für die Bestimmung der verfügbaren internen Leistung ist der Blattwinkel, jedenfalls gemäß einer Ausführungsform, nicht von Relevanz.

Gemäß einer Ausführungsform wird vorgeschlagen, dass zum Bestimmen der verfügbaren internen Leistung ein Leistungsbeobachter verwendet wird und außerdem oder alternativ zum Bestimmen der äquivalenten Windgeschwindigkeit ein Windbeobachter verwendet wird. Dieser Leistungsbeobachter und dieser Windbeobachter sind somit Zustandsbeobachter im regelungstechnischen Sinne. Sie können synonym auch bezeichnet werden als Zustandsbeobachter zur Beobachtung oder Schätzung einer Leistung beziehungsweise Zustandsbeobachter zur Beobachtung beziehungsweise Schätzung einer Windgeschwindigkeit.

Demnach, besonders wenn beide Zustandsbeobachter kombiniert werden, beobachtet der Leistungsbeobachter die verfügbare interne Leistung und gibt diese als Eingangsgröße oder über die Aufaddierung der Verlustleistung als modifizierte Eingangsgröße an den Windbeobachter, der schließlich als Ausgangsgröße die äquivalente Windgeschwindigkeit ausgibt.

Vorzugsweise hat der Windbeobachter drei Eingangsgrößen, nämlich die bestimmte verfügbare interne Leistung zuzüglich erfasster oder bestimmter Generatorverluste, die erfasste Drehzahl und wenigstens einen Blattwinkel. Als Ausgangsgrößen wird für den Windbeobachter neben der äquivalenten Windgeschwindigkeit eine verfügbare Leistung ausgegeben, die sich nämlich bei einem optimalen Blattwinkel und optimaler Schnelllaufzahl bei der erfassten äquivalenten Windgeschwindigkeit ergeben müsste. Schließlich wird auch gemäß einer Ausführungsform vorgeschlagen, als dritte Ausgangsgröße die aktuelle Schnelllaufzahl auszugeben. Der Windbeobachter kann somit basierend auf drei Eingangsgrößen diese drei Ausgangsgrößen ermitteln. Besonders die Schnelllaufzahl kann dabei eine Zusatzinformation zum Prüfen der Ergebnisse auf Plausibilität sein.

Besonders kann durch die Verwendung der vorgeschlagenen Zustandsbeobachter das jeweils zugrunde liegende System auf einfache und besonders auch auf verzögerungsfreie oder -arme Art und Weise mit hoher Genauigkeit berücksichtigt werden.

Die jeweiligen Zustandsbeobachter können unter Kenntnis der genannten Ein- und Ausgangsgrößen über grundsätzlich bekannte regelungstechnische Ansätze erstellt und dimensioniert werden. Ein wichtiger Aspekt, der Teil dieser Erfindung ist, besteht darin, dass besonders durch einen ersten Zustandsbeobachter die verfügbare interne Leistung aus der erfassten elektrischen Leistung und der erfassten Drehzahl bestimmt wird und eine Eingangsgröße zusammen mit der erfassten Drehzahl für einen zweiten Zustandsbeobachter zu bilden, der dann besonders die gewünschte Größe der äquivalenten Windgeschwindigkeit daraus bestimmt. Die Verwendung von Zustandsbeobachtern wird hierzu vorzugsweise vorgeschlagen, muss aber nicht die einzige Lösung sein, um jeweils die genannten Ausgangsgrößen aus den genannten Eingangsgrößen zu bestimmen.

Gemäß einer Ausführungsform wird vorgeschlagen, dass die Windenergieanlage mittels eines einen Gleichspannungszwischenkreis aufweisenden Wechselrichters in ein elektrisches Versorgungsnetz einspeist und die verfügbare interne Leistung die an dem Gleichspannungszwischenkreis verfügbare Leistung bezeichnet. Hier liegt also insbesondere ein Vollumrichterkonzept zugrunde, das einen solchen Gleichspannungszwischenkreis aufweist. Vorzugsweise sind die Eingangsgrößen zur Bestimmung der verfügbaren internen Leistung die gemessene Drehzahl des Rotors und die in den Gleichspannungszwischenkreis eingespeiste elektrische Leistung. Insoweit ein Leistungsbeobachter verwendet wird, bilden diese beiden Größen die Eingangsgrößen dieses Leistungsbeobachters. Die in den Gleichspannungszwischenkreis eingespeiste elektrische Leistung ist somit eine Eingangsgröße, die erst, zusammen mit der gemessenen Drehzahl, dazu verwendet wird, die verfügbare interne Leistung zu bestimmen. Besonders wird die gemessene eingespeiste elektrische Leistung dadurch im Grunde insoweit verbessert, als sie dann besser geeignet ist, um schließlich die äquivalente Windgeschwindigkeit zu bestimmen.

Gemäß einer Ausführungsform wird ein Verfahren vorgeschlagen, dass dadurch gekennzeichnet ist, dass der bzw. ein zur Ermittlung der verfügbaren internen Leistung verwendeter Leistungsbeobachter definiert ist durch die Struktur:

$$\begin{bmatrix} \dot{\hat{\omega}} \\ \dot{\hat{T}}_{mech} \end{bmatrix} = \begin{bmatrix} -k_\omega & \frac{1}{J} \\ -k_T & 0 \end{bmatrix} \begin{bmatrix} \hat{\omega} \\ \hat{T}_{mech} \end{bmatrix} + \begin{bmatrix} k_\omega & -\frac{1}{J} \\ k_T & 0 \end{bmatrix} \begin{bmatrix} \omega \\ T_{el} \end{bmatrix}$$

in der

- J das gemeinsame Trägheitsmoment des Rotors und Generators bezeichnet,

- ω die Drehzahl des Generators ist,

- $k_\omega$ und $k_T$ Parameter zur Beeinflussung der Dynamik des Beobachters sind,

- $T_{el}$ als elektrisches Drehmoment bezeichnet wird und sich als Quotient eingespeister Leistung $P_{DC}$ in einen bzw. den elektrischen Zwischenspeicher und der Drehzahl ω berechnet und

- $T_{mech}$, das mechanische Drehmoment des Rotors und Generators bezeichnet, wobei die beobachteten Größen mit einem ^-Zeichen gekennzeichnet sind, Ableitungen nach der Zeit mit einem Punkt versehen sind, und die zu ermittelnde verfügbare Leistung als Produkt aus beobachteter Drehzahl $\hat{\omega}$ und beobachtetem mechanischen Drehmoment $\hat{T}_{mech}$ berechnet wird.

Dies ist somit eine konkrete Angabe eines Zustandsbeobachters, nämlich des Leistungsbeobachters, mit dem die verfügbare interne Leistung bestimmt werden kann und dann auch besonders gut geeignet ist zur Weiterverwendung, um die äquivalente Windgeschwindigkeit zu bestimmen. Es ist erkennbar, dass dieser konkret vorgeschlagene Leistungsbeobachter die entsprechende Dynamik der Windenergieanlage auf einfache Art und Weise berücksichtigt. Die Drehzahl ω des Generators kann hierbei der Drehzahl des Rotors entsprechen, wenn kein Getriebe vorliegt.

Gemäß einer weiteren Ausführungsform wird vorgeschlagen, dass aus der bestimmten äquivalenten Windgeschwindigkeit eine insgesamt aus dem Wind entnehmbare und zur Einspeisung in das elektrische Versorgungsnetz verfügbare Leistung ermittelt wird. Hier wird zunutze gemacht, dass die gemäß den beschriebenen Ausführungsformen bestimmte äquivalente Windgeschwindigkeit durch die Art ihrer Bestimmung eine vergleichsweise hohe Genauigkeit aufweist und somit als Grundlage dienen kann, eine Leistung zu bestimmen, die in das elektrische Versorgungsnetz eingespeist werden könnte, wenn die Anlage keiner Drosselung unterliegen würde. Entsprechend wird dies vorzugsweise dann ausgeführt, wenn die Windenergieanlage in einem gedrosselten Betrieb betrieben wird. Vorzugsweise kann allerdings auch eine solche Berechnung der einspeisbaren Leistung vorgenommen werden, wenn die Windenergieanlage nicht gedrosselt wird. Das Ergebnis müsste dann mit der tatsächlich aktuell eingespeisten Leistung übereinstimmen. Sollten sich generelle Unterschiede ergeben, also beispielsweise eine erkennbar systematische Abweichung, so könnte dies für einen Abgleich des Verfahrens verwendet werden. Dies gilt auch für die ermittelte äquivalente Windgeschwindigkeit. Wie bereits beschrieben, unterliegt die durch ein Gondelanemometer gemessene Windgeschwindigkeit kurzfristigen Schwankungen und ist bei kurzer zeitlicher Mittelung nicht repräsentativ für die erzeugte Leistung der Windenergieanlage. Insbesondere wenn die Windenergieanlage nicht gedrosselt ist, erlaubt die berechnete äquivalente Windgeschwindigkeit einen Vergleich mit der gemessenen Windgeschwindigkeit, auf Basis dessen zum Beispiel Korrekturkennlinien erstellt werden können.

Erfindungsgemäß wird auch eine Windenergieanlage vorgeschlagen, die einen Rotor mit in ihrem Blattwinkel verstellbaren, eine Rotorblattebene überstreichende Rotorblätter aufweist. Die Windenergieanlage ist dazu vorbereitet, eine äquivalente Windgeschwindigkeit der Rotorblattebene zu erfassen und dazu weist sie ein Leistungsbeobachtungsmittel und ein Windbeobachtermittel auf. Das Leistungsbeobachtungsmittel ist dazu vorbereitet, eine elektrische in der Windenergieanlage verfügbare interne Leistung in Abhängigkeit einer erfassten elektrischen Leistung und in Abhängigkeit einer erfassten Drehzahl des Rotors zu bestimmen. Die erfasste elektrische Leistung und die erfasste Drehzahl des Rotors sind somit insbesondere Eingangsgrößen des Leistungsbeobachtungsmittels. Das Windbeobachtermittel ist dazu vorbereitet, die äquivalente Windgeschwindigkeit in Abhängigkeit von der bestimmten internen Leistung und der erfassten Drehzahl zu bestimmen. Insbesondere bilden somit die bestimmte interne Leistung und die erfasste Drehzahl jeweils eine Eingangsgröße für das Windbeobachtermittel. Dabei kann besonders die bestimmte interne Leistung als modifizierte Größe eingehen, bei der nämlich zunächst noch Generatorverluste aufaddiert werden können. Alternativ kann das Windbeobachtermittel von sich aus eine Modifizierung wie das Aufaddieren der Generatorverluste vorsehen.

Vorzugsweise wird in der Windenergieanlage ein Verfahren ausgeführt, wie es im Zusammenhang mit wenigstens einer vorstehend beschriebenen Ausführungsform erläutert wurde.

Erfindungsgemäß wird auch ein Windpark vorgeschlagen, der wenigstens zwei Windenergieanlagen gemäß wenigstens einer der vorstehend beschriebenen Ausführungsformen aufweist. Ein Windpark ist insoweit die Zusammenfassung mehrerer Windenergieanlagen, die zusammen über einen gemeinsamen Netzanschlusspunkt in das elektrische Versorgungsnetz einspeisen. Der besondere Vorteil des Windparks liegt darin, dass er durch das gemeinsame Einspeisen der Leistung vieler Windenergieanlagen auch eine hohe Regelleistung bereitstellen kann. Entsprechend kann der Windpark beispielsweise durch Vorgaben eines Betreibers des elektrischen Versorgungsnetzes, oder abhängig von Zuständen des elektrischen Versorgungsnetzes vergleichsweise viel Regelleistung zur Verfügung stellen. Entsprechend ergeben sich dann auch große Leistungsdifferenzen zwischen der tatsächlich eingespeisten Leistung und der verfügbaren Leistung. Daher ist es hier von besonderer Bedeutung, die verfügbare Leistung beziehungsweise die Differenz zwischen verfügbarer Leistung und eingespeister Leistung möglichst genau zu bestimmen. Die vorgeschlagene Bestimmung einer äquivalenten Windgeschwindigkeit kann dafür eine gute Basis schaffen.

Insbesondere erfolgt eine Berechnung der insgesamt in das elektrische Versorgungsnetz einzuspeisenden Leistung durch Aufsummierung der durch die Windenergieanlagen jeweils einzeln berechneten Werte.

Die Erfindung wird nun nachfolgend exemplarisch anhand von Ausführungsbeispielen unter Bezugnahme auf die begleitenden Figuren näher erläutert.

Fig. 1    zeigt eine Windenergieanlage schematisch in einer perspektivischen Darstellung.

Fig. 2    zeigt ein Blockschaltbild zur Erläuterung des Algorithmus, der der Bestimmung der äquivalenten Windgeschwindigkeit zugrunde liegt.

Fig. 3    zeigt Diagramme zum Vergleich des Ergebnisses gemäß einer Ausführungsform der Erfindung im Vergleich zu einer bisherigen Herangehensweise.

Fig.4    zeigt schematisch einen Windpark.

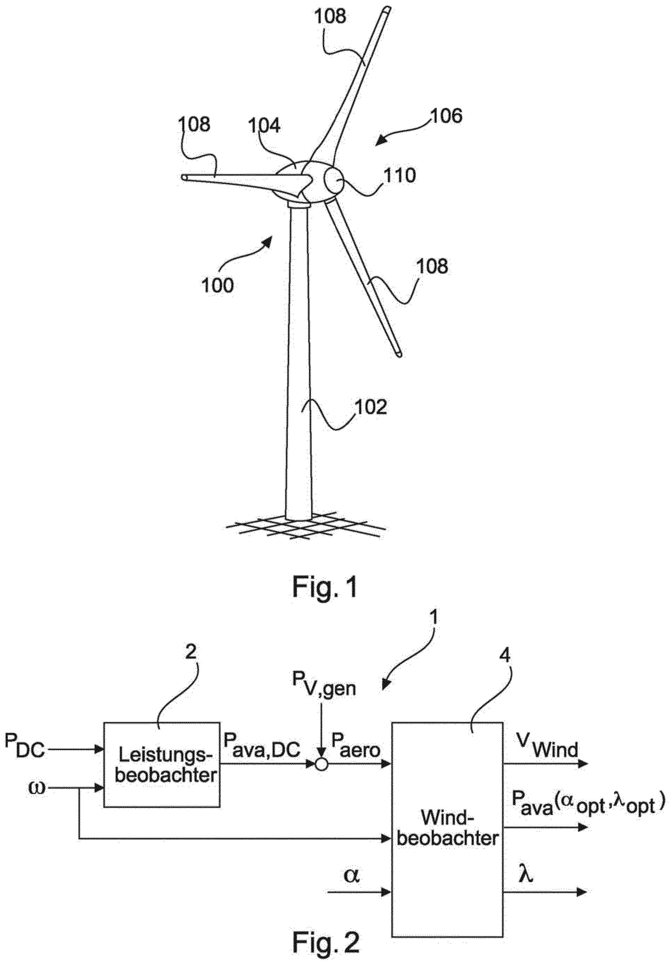

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

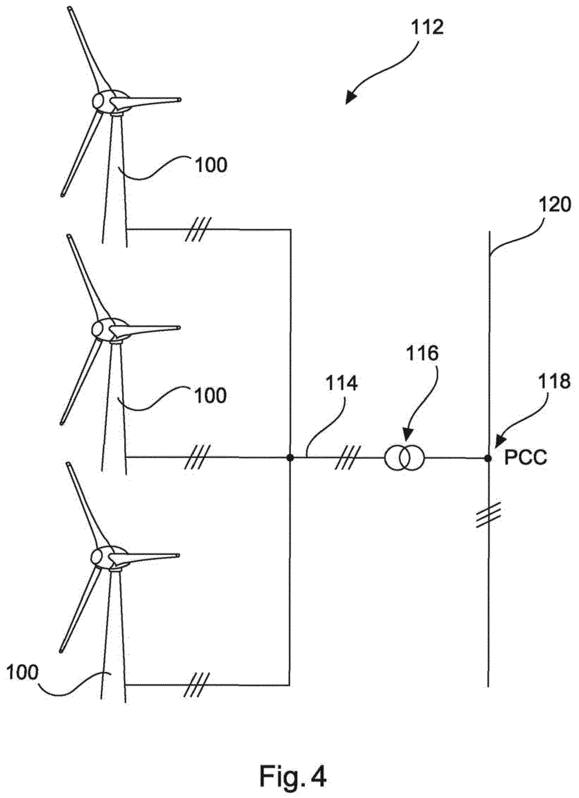

Figur 4 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 4 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

Die vorliegende Erfindung betrifft ein Verfahren bzw. eine entsprechende Vorrichtung zur Bestimmung der äquivalenten Windgeschwindigkeit in der Rotorblattebene einer Windenergieanlage (WEA). Insbesondere gemäß einer Ausführungsform erfolgt das unter Verwendung von Messdaten zur elektrischen Leistung, Drehgeschwindigkeit des Rotors und des Blattwinkels.

Eine nachfolgend beschriebene Ausführungsform basiert auf der Verwendung von zwei Beobachtern (im Regelungstechnischen Sinne), die im Zusammenspiel eine dynamisch möglichst korrekte Bestimmung der verfügbaren Maximalleistung und der effektiven Windgeschwindigkeit ermöglichen.

Das Hauptanwendungsziel der vorgeschlagenen Lösung ist die Berechnung der verfügbaren Leistung, d.h. der Leistung, die eine WEA erzeugen könnte, wenn sie nicht durch externe Vorgaben in ihrer Leistung reduziert bzw. begrenzt wird. Dies kann unter anderem zum Anbieten von negativer (Primär-/Sekundär-) Regelleistung genutzt werden, d.h. besonders zum Abregeln einer WEA bei Überfrequenz in einem Energiesystem. Gerade zur Berechnung der verfügbaren Leistung kann die Genauigkeit entsprechender Verfahren eine entscheidende Rolle spielen.

Im nicht-leistungs-reduzierten Betrieb, der auch als Freifahrt bezeichnet werden kann, erzeugt eine Windenergieanlage eine von der aktuellen Windgeschwindigkeit abhängige Leistung, die durch eine Windgeschwindigkeits-Leistungs-Kennlinie für jeden Windenergieanlagen-Typen durch Messungen genau bestimmt ist. Bei genauer Kenntnis der Windgeschwindigkeit kann also auf Basis dieser Kennlinie die verfügbare Leistung bestimmt werden.

Eine Möglichkeit, in jedem Betriebszustand die verfügbare Leistung zu bestimmen, ergäbe sich dementsprechend durch die Messung der Windgeschwindigkeit mit einem typischerweise auf der Gondel einer Windenergieanlage verbauten Anemometer. Eine solche Messung, obwohl mit heutigen Ultraschallanemometern sehr genau durchführbar, ist jedoch nur bedingt für die genannte Anwendung brauchbar. Zum einen misst das Anemometer die Windgeschwindigkeit nur in der Mitte der durch die Rotorblätter definierten Ebene. Die Windgeschwindigkeiten an den Blattspitzen, die bei aktuellen Windenergieanlagen 50 und mehr Meter von der Gondel entfernt sind, kann nicht gemessen werden. Darüber hinaus kann durch die Position des Anemometers hinter den Rotorblättern eine Beeinflussung der Messung durch Verwirbelungen und Beschattung erfolgen. Die Messwerte eines Gondelanemometers weisen daher nur bei Mittelung über lange Zeiträume von 10 Minuten und mehr eine gute Korrelation mit den tatsächlichen Leistungswerten einer WEA auf. Sie sind deshalb für die Bestimmung der aktuell verfügbaren Leistung nicht geeignet, wie auch der Referenz [1] zu entnehmen ist.

Eine zweite Möglichkeit besteht in der Berechnung der verfügbaren Leistung aus der aktuellen Windenergieanlagen-Leistung (z.B. der in den Gleichstromzwischenkreis eingespeisten Leistung einer Windenergieanlagemit Vollumrichter) und dem Blattwinkel der Windenergieanlage. Wird eine Windenergieanlage in ihrer Leistung unter die verfügbare Leistung begrenzt, so muss die Zufuhr an mechanischer Leistung reduziert werden. Dies kann durch die Erhöhung des Blattwinkels erfolgen. Die Reduzierung des aerodynamischen Leistungsbeiwertes $c_p(\lambda, \alpha)$ bei einer Erhöhung des Blattwinkels $\alpha$ hängt dabei im allgemeinen von der Schnelllaufzahl $\lambda$ ab.

Wird nun eine Windenergieanlage durch eine bekannte Leistungs- bzw. Drehzahlregelung ständig und auch bei variierenden Windgeschwindigkeiten bei derselben Schnelllaufzahl, insbesondere bei der optimalen Schnelllaufzahl $\lambda_{opt}$ betrieben, so ergibt sich durch die Erhöhung des Blattwinkels gegenüber einem bestimmten optimalen Blattwinkel $\alpha_{opt}$ eine feste Leistungsreduzierung. Wenn der leistungsreduzierende Effekt für jeden Blattwinkel bestimmt ist, so kann eine Berechnung der verfügbaren Leistung aus der aktuellen WEA-Leistung $P_{ist}$ und dem Leistungsreduzierungsbeiwert $k(\alpha) = 1 - C_p(\lambda_{opt}, \alpha)/c_p(\lambda_{opt}, \alpha_{opt})$ nach folgender Formel erfolgen:

$$P_{verfügbar} = \frac{P_{ist}}{1 - k(\alpha)}$$

Eine konstante Schnelllaufzahl kann jedoch nicht unter allen Betriebsbedingungen gehalten werden. Insbesondere bei starker Abregelung kann es zu Abweichungen vom Optimum kommen. Auf Grund des umgekehrt proportionalen Verhältnisses zwischen Leistungsreduzierungsbeiwert und geschätzter verfügbarer Leistung können hier insbesondere bei starker Abregelung schon kleine Abweichungen im angenommenen Leistungsreduzierungsbeiwert zu Fehlern bei der Berechnung der verfügbaren Leistung führen.

Zur Lösung wird nun ein Algorithmus vorgeschlagen, der die verfügbare Leistung in Abhängigkeit der Windgeschwindigkeit, und somit an allen Betriebspunkten einer WEA möglichst zuverlässig schätzen kann.

Dafür wird gemäß einer Ausführungsform das in Figur 2 dargestellte Verfahren vorgeschlagen. Figur 2 zeigt somit ein Blockschaltbild 1 eines vorgeschlagenen Algorithmus und damit eines vorgeschlagenen Verfahrens zum Bestimmen einer äquivalenten Windgeschwindigkeit $V_{wind}$.

Es kommen darin zwei Beobachter zum Einsatz, die auf Basis bestimmter Messgrößen andere, nicht messbare Werte beobachten bzw. schätzen.

Der in Figur 2 dargestellte Leistungsbeobachter 2 bestimmt aus der in den Gleichspannungszwischenkreis eingespeisten und gemessenen Leistung $P_{DC}$ und der Rotordrehzahl $\omega$ die verfügbare interne Leistung als an dem Gleichspannungszwischenkreis verfügbare Leistung $P_{ava,DC}$.

Per Messung werden somit die Größen Drehzahl ($\omega$) und Leistung im Gleichstromzwischenkreis ($P_{DC}$) erfasst. Die Drehzahl ($\omega$) des Generators entspricht, sofern kein Getriebe vorliegt, der Drehzahl des Rotors. Daraus wird mit Hilfe des Zustandsbeobachters 2 die verfügbare interne Leistung $P_{ava,DC}$ bestimmt bzw. errechnet, die auch als verfügbare aerodynamische Leistung bezogen auf den Zwischenkreis ($\hat{P}_{avaDC}$) bezeichnet werden kann, d.h. sie entspricht der aerodynamischen Leistung abzüglich der Generatorverluste, sowie eventuell abzüglich weiterer Verluste wie Reibungs- oder Stromwandlungsverluste.

Der Leistungsbeobachter kann folgende, vereinfachte Systembeschreibung zu Grunde legen, die auch als Beschleunigungsgleichung eines rotierenden Ein-Massensystems bezeichnet werden kann:

$$J\dot{\omega} = T_{mech} - T_{el} = \frac{1}{\omega}(P_{mech} - P_{el})$$

In dieser Formel bezeichnet J das Trägheitsmoment der rotierenden Massen der WEA, $\omega$ die Drehzahl der WEA, $T_{mech}$ und $P_{mech}$ das an der Welle durch den Wind entstehende Drehmoment bzw. die Leistung, und $T_{el}/P_{el}$ das elektro-mechanische Drehmoment bzw. die Leistung des Generators. Mit einem Punkt sind hier wiederum Ableitungen von Größen nach der Zeit kenntlich gemacht. Wird über einen Zeitraum hinweg eine Generatorleistung entnommen, die die mechanische Leistung übersteigt, folgt ein Abbremsen der WEA.

Zum Leistungsbeobachter 2 und ausgehend von obiger Beschleunigungsgleichung eines rotierenden Ein-Massensystems kann folgendes Zustandsraummodell der Windenergieanlage aufgestellt werden, mit den Zustandsvariablen Drehzahl *(ω)* und mechanisches Drehmoment ($T_{mech}$):

$$\begin{bmatrix} \dot{\omega} \\ \dot{T}_{mech} \end{bmatrix} = \begin{bmatrix} 0 & \frac{1}{J} \\ 0 & 0 \end{bmatrix} \begin{bmatrix} \omega \\ T_{mech} \end{bmatrix} + \begin{bmatrix} -\frac{1}{J} \\ 0 \end{bmatrix} T_{el}$$

Von den hier verwendeten Größen kann das mechanische Drehmoment $T_{mech}$ nicht gemessen werden und soll deshalb über einen Zustandsbeobachter aus den Messdaten errechnet werden. Da darüber hinaus das Drehzahlsignal oft nur in geringer Auflösung und mit niedriger Abtastrate gemessen wird, wird auch für diesen Wert eine Zustandsbeobachtung vorgeschlagen. Eine geeignete Beobachterstruktur lässt sich wie folgt formulieren, wobei zur weiteren Erläuterung auf die Referenz [4] verwiesen wird:

$$\begin{bmatrix} \dot{\hat{\omega}} \\ \dot{\hat{T}}_{mech} \end{bmatrix} = \begin{bmatrix} -k_\omega & \frac{1}{J} \\ -k_T & 0 \end{bmatrix} \begin{bmatrix} \hat{\omega} \\ \hat{T}_{mech} \end{bmatrix} + \begin{bmatrix} k_\omega & -\frac{1}{J} \\ k_T & 0 \end{bmatrix} \begin{bmatrix} \omega \\ T_{el} \end{bmatrix}$$

Hierin sind beobachtete Variablen im Gegensatz zu den gemessenen Eingangsgrößen Drehzahl $\omega$ und dem

elektrischen Drehmoment $T_{el} = \frac{P_{DC}}{\omega}$ mit ^ gekennzeichnet. $P_{DC}$ ist die in den Gleichspannungszwischenkreis eingespeiste elektrische Leistung. Die beiden Parameter $k_\omega$ und $k_T$ beeinflussen das dynamische Verhalten und bei einer zeitdiskreten Implementierung auch die Stabilität des Zustandsbeobachters und müssen unter Berücksichtigung dieser Aspekte gewählt werden.

Die Berechnung der aerodynamischen Leistung $\hat{P}_{avaDC}$ erfolgt über das Produkt aus Drehzahl und Drehmoment. Das entspricht dann der bestimmten verfügbaren internen Leistung $P_{ava,DC}$.

Eingangsgrößen für die Bestimmung der verfügbaren internen Leistung $P_{ava,DC}$ sind die gemessene, in den Gleichstromzwischenkreis eingespeiste elektrische Leistung $P_{DC}$ sowie die gemessene Windenergieanlagen-Drehzahl $\omega$. Ausgabewert ist dann die verfügbare elektrische Leistung, bezogen auf den Gleichstromzwischenkreis, $P_{ava,DC}$. Dieser Beobachter ist wichtig, da sich die Windenergieanlage unter bestimmten Umständen nicht an einem stationären Betriebspunkt befindet, an dem die Leistung $P_{DC}$ der gerade verfügbaren Windleistung entspricht, sondern im Normalbetrieb fast permanent beschleunigt oder abbremst, und bspw. für eine Netzstützung, bei der Energie aus kinetischer Energie der Rotation genommen wird, von einer normalen Drehzahl-Leistungs-Kennlinie abweichen kann.

Zu der auf den Gleichstromzwischenkreis bezogenen verfügbaren internen Leistung $P_{ava,DC}$ werden die Generatorverluste $P_{VGen}$ hinzu addiert. Diese Verluste können entweder durch Messungen im Betrieb bestimmt werden oder einer Kennlinie für den jeweiligen Generatorarbeitspunkt entnommen werden (ggf. unter Berücksichtigung von Temperaturmesswerten). Zusätzlich können, falls relevant, auch Reibungs- und Stromwandlungsverluste hinzuaddiert werden. Das Ergebnis dieser Addition ist die verfügbare Generatoreingangsleistung der Windenergieanlage, vereinfachend als $P_{aero}$ bezeichnet. Für diese Berechnung sollten die für die maximal verfügbare Eingangsleistung erwarteten Generatorverluste anstatt der aktuellen Generatorverluste verwendet werden.

Diese Leistung, sowie die gemessene Windenergieanlagen-Drehzahl $\omega$ und der aktuelle Blattwinkel $\alpha$ werden als Eingangswerte für den zweiten Beobachter, den Windbeobachter 4 verwendet. Dieser beobachtet die Windgeschwindigkeit $V_{Wind}$, die bei dem aktuellen Blattwinkel $\alpha$ zu der verfügbaren Leistung führt. Prinzipiell geht es hierbei um eine Lösung v für die Gleichung

$$P_{aero} = \frac{1}{2}\rho A v^3 C_p(\lambda, \alpha),$$

worin $P_{aero}$ als durch den Leistungsbeobachter 2 als bekannt angenommen wird, $\rho$ die Luftdichte, A die Rotorfläche und $C_p(\lambda,\alpha)$ den Leistungsbeiwert in Abhängigkeit der Schnelllaufzahl $\lambda$ und des Blattwinkels $\alpha$ bezeichnen. Hierbei handelt es sich um eine nichtlineare Gleichung, in die die Windgeschwindigkeit v direkt und indirekt über die Schnelllaufzahl $\lambda = \frac{\omega R}{v}$ eingeht ($\omega$ bezeichnet wiederum die WindenergieanlagenDrehzahl in rad/s und R den Radius des aerodynamischen Rotors). Verschiedene Lösungen dazu sind bekannt aus der Referenz [2].

Auf Grund der nichtlinearen Eigenschaften der Gleichung hat sich ein nichtlinearer Ansatz zur Bestimmung der Windgeschwindigkeit als Grundlage für den Windbeobachter als vorteilhaft herausgestellt und dazu wird auf die Referenzen [2,3] verwiesen, der unter dem Begriff Immersion and Invariance geführt wird.

Im Gegensatz zu den Referenzen [2] und [3] wird jedoch in der hier vorgeschlagenen Lösung nicht die gemessene elektrische Windenergieanlagen-Leistung als Eingangsgröße für den Windbeobachter 4 verwendet, sondern die über den Leistungsbeobachter 2 bestimmte bzw. errechnete verfügbare interne Leistung. Dies ist wichtig für die korrekte, zumindest gewünschte Funktionsweise des Windbeobachters 4 im transienten Betrieb der Windenergieanlage (d.h. bei starkem Beschleunigen oder Abbremsen, bspw. für eine Netzstützung, bei der Energie aus kinetischer Energie der Rotation genommen wird).

Vorzugsweise gibt der Windbeobachter 4 auch noch die verfügbare Leistung Pava($\alpha_{opt}$, $\lambda_{opt}$) der Windenergieanlage aus. Das ist die Leistung, die bei der durch den Windbeobachter 4 bestimmten äquivalenten Windgeschwindigkeit $V_{Wind}$ von der Windenergieanlage erzeugt werden könnte, wenn der optimale Blattwinkel $\alpha_{opt}$ und die optimale Schnelllaufzahl $\lambda_{opt}$ eingestellt wären. Das lässt sich bspw. basierend auf der äquivalenten Windgeschwindigkeit $V_{Wind}$ und unter Berücksichtigung bekannter Zusammenhänge zwischen Wind und erzeugter Leistung bei den genannten Bedingungen (optimaler Blattwinkel $\alpha_{opt}$ und die optimale Schnelllaufzahl $\lambda_{opt}$) berechnen. Dafür kann bspw. eine entsprechende Kennlinie hinterlegt sein. Zusätzlich wird vorgeschlagen, die aktuelle Schnelllaufzahl $\lambda$ auszugeben, die sich aus der Windgeschwindigkeit, Drehzahl und dem Rotordurchmesser berechnen lässt.

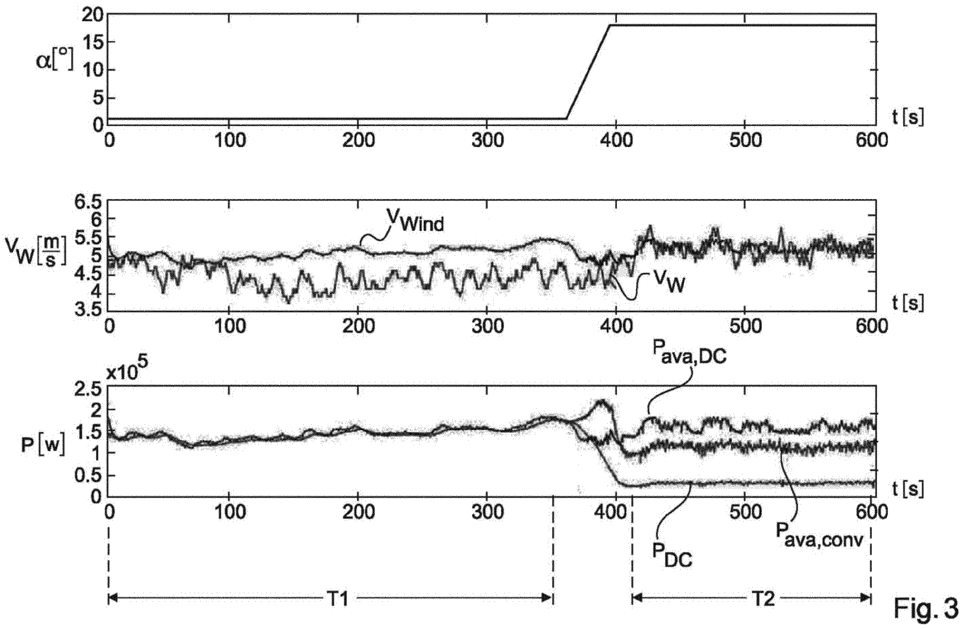

Ergebnisse des vorgeschlagenen Leistungs- und Windbeobachters werden in Figur 3 mit einer konventionellen Berechnung der verfügbaren Leistung verglichen. Grundlage für die in Figur 3 dargestellten Ergebnisse ist eine Messung an einer Windenergieanlage vom Typ Enercon E-70 E4, die in den ersten 350 Sekunden des untersuchten Messfensters mit konstant 1° Blattwinkel betrieben wird, und danach den Blattwinkel auf 17,5° einstellt. Gemessen wurden Windgeschwindigkeit $V_W$ und in den Zwischenkreis eingespeiste elektrische Leistung $P_{DC}$. Die geschätzte Windgeschwindigkeit $V_{Wind}$ ist im zweiten Graphen dargestellt, und die geschätzte verfügbare interne Leistung $P_{ava,DC}$, die auf Basis des Windbeobachters 4 ermittelt wurde, ist im dritten Graphen eingezeichnet. Zum Vergleich ist die nach einer konventionellen Methode erfasste verfügbare Leistung $P_{ava,conv}$ außerdem im dritten Graphen dargestellt.

Die vorgeschlagene Lösung kann eingesetzt werden für Anwendungen positiver und negativer Regelenergie mit Windenergie, sowohl primärer Regelenergie als auch sekundärer Regelenergie. Hier kann besonders die verbesserte Genauigkeit wichtig sein. Die Lösung kann als Ersatz eines zweiten Gondelanemometers Verwendung finden.

Durch die korrekte Bestimmung der Windgeschwindigkeit, zumindest Bestimmung mit hoher Genauigkeit, lässt sich in vielen Betriebszuständen die maximale verfügbare Leistung der Windenergieanlage berechnen. Dies erlaubt die korrekte, zumindest relativ genaue Bestimmung z.B. von erbrachter negativer Regelleistung, bei der eine Windenergieanlage oder ein Windpark ihre Leistung um einen bestimmten Wert unter die verfügbare Leistung reduzieren müssen. Weiterhin ließe sich evtl. die Anforderung nach einem zweiten Windmessgerät, z.B. für die Erfüllung sicherheitsgerichteter Anforderungen über Software anstatt über Hardware lösen.

Die vorgeschlagene Lösung ist zumindest eine Verbesserung zu vorbekannten Lösungen. Das Kernproblem der Bestimmung der Windgeschwindigkeit besteht in der Lösung der aerodynamischen Leistungsgleichung:

$$P_{aero} = \frac{1}{2}\rho A v^3 C_p(\lambda, \alpha), \, (1)$$

worin $\rho$ die Luftdichte, A die Rotorfläche, die synonym auch als Rotorblattfläche bezeichnet werden kann, $v$ die Windgeschwindigkeit und $C_p(\lambda, \alpha)$ den Leistungsbeiwert als Funktion der Schnelllaufzahl $\lambda$ und des Blattwinkels $\alpha$ bezeichnet. Obwohl diese Gleichung strenggenommen die mechanische Leistung des Rotors am Generatorrotor bezeichnet, lässt sie sich doch näherungsweise aus der gemessenen elektrischen Leistung und den geschätzten oder berechneten Generatorverlusten bestimmen und kann somit als bekannt vorausgesetzt werden, jedoch als mit Rauschen behaftete Größe. Die Schwierigkeit in der Lösung dieser Gleichung nach der Unbekannten v liegt nun in dem doppelten Eingang der Variablen in die Gleichung sowohl direkt ($v^3$) als auch über die Schnelllaufzahl $\lambda = \frac{\omega_m R}{v}$ ($\omega_m$ bezeichnet wiederum die Windenergieanlagen-Drehzahl in rad/s).

Eine numerisch effiziente und gleichzeitig genaue Lösung gemäß Referenz [2] kann über einen Beobachter nach dem Prinzip "Immersion and Invariance" erreicht werden, wie in Referenz [3] gezeigt ist. Dazu wird folgendes Zustandsgleichungssystem implementiert:

$$\dot{\hat{v}}_w^I = \gamma \left[ \frac{1}{J} \frac{P_{mech}}{\omega_m} - \Phi(\omega_m, \hat{v}_w^I + \gamma \omega_m) \right], \, (2)$$

$$\hat{v}_w = \hat{v}_w^I + \gamma \omega_m, \, (3)$$

worin $\Phi(\omega_m, v_w) = \frac{1}{2}\rho \frac{A}{J} \frac{v_w^3}{\omega_m} C_p\left(\frac{r\omega_m}{v_w}, \alpha\right)$, $J$ das Trägheitsmoment des Windenergieanlagen-Rotors, $P_{mech}$ die durch den Leistungsbeobachter geschätzte verfügbare DC-Leistung des Generators zuzüglich der Generatorverluste, $\gamma > 0$ ein einstellbarer Adaptionsparameter des Filters, $\rho$ den Luftdruck, A die Rotorfläche und $r$ den Rotorradius der WEA bezeichnen. Die Ableitung der Variable $\hat{v}_w^I$ nach der Zeit ist mit einem Punkt gekennzeichnet.

Durch numerische Lösung dieses Zustandsgleichungssystems werden die Ausgangswerte des Windbeobachters berechnet. Dabei bildet die in Gleichung (3) berechnete Variable $\hat{v}_w$ die geschätzte Windgeschwindigkeit $v_{Wind}$. Die geschätzte Schnelllaufzahl $\lambda$ ergibt sich dann aus der gemessenen Drehzahl und der geschätzten Windgeschwindigkeit nach der oben genannten Gleichung. Die verfügbare Leistung ergibt sich nach Lösung von Gleichung (1) sowie unter Berücksichtigung von in der Windenergieanlage an dem geschätzten optimalen Arbeitspunkt anfallenden Verlusten sowie von etwaigen technischen oder operativen Beschränkungen, die eine Begrenzung dieser verfügbaren Leistung zur Folge haben können.

Eine entscheidende Veränderung des hier beschriebenen Windbeobachters gegenüber der in Referenz [3] beschriebenen Lösung besteht in der Verwendung einer durch einen separaten Beobachter geschätzten verfügbaren Leistung für die Berechnung von $\dot{\hat{v}}_w^I$ (Gleichung (2)). In Referenz [3] wird stattdessen direkt die gemessene elektrische Leistung bzw. das elektrische Drehmoment verwendet, unter der Annahme, dass die Windenergieanlage im Teillastbereich stets in der Nähe ihres optimalen Betriebspunktes betrieben wird. In der Praxis besteht jedoch auf Grund von Beschleunigungs- und Abbremsvorgängen bei variabler Windgeschwindigkeit, und z.T. auch gewollt auf Grund von bestimmten Anforderungen wie der Netzfrequenzstützung bei der Energie aus kinetischer Energie der Rotation genommen wird eine signifikante Abweichung zwischen der aktuellen elektrischen Leistung und der im optimalen Betriebspunkt erreichbaren Leistung, bzw. der im Wind verfügbaren Leistung, so dass eine separate Bestimmung der verfügbaren Leistung vor der Lösung der aerodynamischen Leistungsgleichung über den Windbeobachter zur akkuraten Bestimmung der Windgeschwindigkeit in allen Betriebspunkten vorgeschlagen wird.

Eine weitere Abweichung gegenüber der in Referenz [3] dargestellten Lösung besteht in der Berücksichtigung des aktuellen Blattwinkels $\alpha$ in der Bestimmung des Leistungsbeiwertes $C_p(\lambda,\alpha)$. Dies ist von entscheidender Bedeutung für die Verwendung des Windbeobachters zur Bestimmung der maximal möglichen Leistung, da im abgeregelten Betrieb einer Windenergieanlage der Blattwinkel in der Regel höher ist als der optimale Blattwinkel. Somit ist zur Bestimmung der maximal verfügbaren Leistung die durch den Windbeobachter geschätzte Windgeschwindigkeit sowie die Berechnung des Leistungsbeiwertes für diese Windgeschwindigkeit sowie den optimalen Blattwinkel $\alpha_{opt}$ sowie einer optimalen Schnelllaufzahl $\lambda_{opt}$, d.h. $C_p(\lambda_{opt}, \alpha_{opt})$, sowie die Lösung der aerodynamischen Leistungsgleichung (1) mit der geschätzten Windgeschwindigkeit und dem optimalen $C_p(\lambda_{opt}, \alpha_{opt})$ vorteilhaft.

Es wird somit eine Verbesserung der Genauigkeit der Bestimmung der verfügbaren Leistung bei starker Abregelung geschaffen.

Besondere Vorteile der vorgeschlagenen Lösung können bestehen in der

- Bestimmung der verfügbaren Leistung an möglichst allen Arbeitspunkten, an denen die Windenergieanlage in Betrieb ist,
- Berücksichtigung von Betriebszuständen, an denen die Windenergieanlage von ihrem stationären Arbeitspunkt abweicht, u.a. bei Erbringung von Netzdienstleistungen ,
- Bestimmung der äquivalenten Windgeschwindigkeit in der Rotorebene ohne zusätzliche Sensorik und außerdem
- bei entsprechender Implementierung hochgenaue Bestimmung von Drehzahl und Beschleunigung der Windenergieanlage.

Referenzen:

[1] K. E. Johnson, L. Y. Pao, M. J. Balas, L. J. Fingersh: Control of Variable-Speed Wind Turbines - Standard and Adaptive Techniques for Maximizing Energy Capture. IEEE Control Systems Magazine, Juni 2006, S. 70-81.

[2] M. N. Soltani, T. Knudsen, M. Svenstrup, R. Wisniewski, P. Brath, R. Ortega, K. Johnson: Estimation of Rotor Effective Wind Speed: A Comparison. IEEE Transactions on Control Systems Technology, 21(4), Juli 2013, S. 1155-1167.

[3] R. Ortega, F. Macilla-David, F. Jaramillo: A Globally Convergent Wind Speed Estimator for Windmill Systems. In Proc. 2011 50th IEEE Conference on Decision and Control, Orlando, FL, USA, Dez. 2011, S. 6079-6084.

[4] C. M. Verrelli, A. Savoia, M. Mengoni, R. Marino, P. Tomei, L. Zarri: On-line Identification of Winding Resistances and Load Torque in Induction Machines. IEEE Transactions on Control Systems Technology, Bd. 22(4), Juli 2014.

**Patentansprüche**

1. Verfahren zum Bestimmen einer äquivalenten Windgeschwindigkeit einer Rotorblattebene einer Windenergieanlage (100) mit einem Rotor (106) mit in ihrem Blattwinkel verstellbaren Rotorblättern (108), umfassend die Schritte:

- Bestimmen einer elektrischen in der Windenergieanlage (100) verfügbaren internen Leistung ($P_{ava,DC}$) in Abhängigkeit einer erfassten elektrischen Leistung ($P_{DC}$) und einer erfassten Drehzahl ($\omega$) des Rotors (106) und
- Bestimmen der äquivalenten Windgeschwindigkeit ($V_{Wind}$) in Abhängigkeit der bestimmten verfügbaren internen Leistung ($P_{ava,DC}$) und der erfassten Drehzahl ($\omega$), wobei der Windbeobachter (4) als Eingangsgrößen
- die bestimmte verfügbare interne Leistung ($P_{ava,DC}$) zuzüglich erfasster oder bestimmter Generatorverluste ($P_{VGen}$),
- die erfasste Drehzahl ($\omega$) und

- wenigstens einen Blattwinkel ($\alpha$)

erhält und außerdem oder alternativ das Windbeobachtungsmittel (4) als Ausgangsgrößen

- die äquivalente Windgeschwindigkeit ($V_{Wind}$),
- eine bei optimalem Blattwinkel ($\alpha$) und optimaler Schnelllaufzahl verfügbare Leistung und
- die aktuelle Schnelllaufzahl ($\lambda$)

ausgibt.

2. Verfahren nach Anspruch 1, **dadurch gekennzeichnet, dass** in dem Schritt zum Bestimmen der äquivalenten Windgeschwindigkeit ($V_{Wind}$)

- wenigstens ein Blattwinkel ($\alpha$) eines der Rotorblätter (108) berücksichtigt wird und außerdem oder alternativ
- Generatorverluste eines Generators, sowie optional Reibungsverluste rotierender Teile und/oder Leistungswandlungsverluste eines oder mehrerer Stromwandler der Windenergieanlage (100) berücksichtigt werden.

3. Verfahren nach Anspruch 1 oder 2, **dadurch gekennzeichnet, dass**

- zum Bestimmen der verfügbaren internen Leistung ($P_{ava,DC}$) ein Leistungsbeobachter (2) und außerdem oder alternativ
- zum Bestimmen der äquivalenten Windgeschwindigkeit ($V_{Wind}$) ein Windbeobachter (4) verwendet wird.

4. Verfahren nach einem der vorstehenden Ansprüche, **dadurch gekennzeichnet, dass** die Windenergieanlage (100) mittels eines einen Gleichspannungszwischenkreis aufweisenden Wechselrichters in ein elektrisches Versorgungsnetz (120) einspeist und die verfügbare interne Leistung ($P_{ava,DC}$) die an dem Gleichspannungszwischenkreis verfügbare Leistung bezeichnet.

5. Verfahren nach Anspruch 4, **dadurch gekennzeichnet, dass** als Eingangsgrößen zur Bestimmung der verfügbaren internen Leistung ($P_{ava,DC}$)

- die gemessene Drehzahl ($\omega$) des Rotors (106) und
- die in den Gleichspannungszwischenkreis eingespeiste elektrische Leistung ($P_{DC}$)

verwendet werden bzw. als Eingangsgrößen für den Leistungsbeobachter (2) verwendet werden.

6. Verfahren nach einem der vorstehenden Ansprüche, **dadurch gekennzeichnet, dass** der bzw. ein zur Ermittlung der verfügbaren internen Leistung ($P_{ava,DC}$) verwendete Leistungsbeobachter (2) definiert ist durch die Struktur:

$$\begin{bmatrix} \dot{\hat{\omega}} \\ \dot{\hat{T}}_{mech} \end{bmatrix} = \begin{bmatrix} -k_\omega & \frac{1}{J} \\ -k_T & 0 \end{bmatrix} \begin{bmatrix} \hat{\omega} \\ \hat{T}_{mech} \end{bmatrix} + \begin{bmatrix} k_\omega & -\frac{1}{J} \\ k_T & 0 \end{bmatrix} \begin{bmatrix} \omega \\ T_{el} \end{bmatrix}$$

in der

- J das gemeinsame Trägheitsmoment des Rotors und Generators bezeichnet,
- $\omega$ die Drehzahl des Generators ist,
- $k_\omega$ und $k_T$ Parameter zur Beeinflussung der Dynamik des Beobachters sind,
- $T_{el}$ als elektrisches Drehmoment bezeichnet wird und sich als Quotient eingespeister Leistung $P_{DC}$ in einen bzw. den elektrischen Zwischenspeicher und der Drehzahl $\omega$ berechnet und
- $T_{mech}$, das mechanische Drehmoment des Rotors und Generators bezeichnet, wobei

die beobachteten Größen mit einem ^-Zeichen gekennzeichnet sind, zeitliche Ableitungen mit einem Punkt, und die zu ermittelnde verfügbare Leistung als Produkt aus beobachteter Drehzahl $\hat{\omega}$ und beobachtetem mechanischen Drehmoment $\hat{T}_{mech}$ berechnet wird.

7. Verfahren nach einem der vorstehenden Ansprüche, **dadurch gekennzeichnet, dass** aus der bestimmten äquivalenten Windgeschwindigkeit ($V_{Wind}$) eine insgesamt aus dem Wind entnehmbare und zur Einspeisung in ein bzw. das elektrische Versorgungsnetz (120) verfügbare Leistung ($P_{ava,DC}$) ermittelt wird.

8. Windenergieanlage (100) mit einem Rotor (106) mit in ihrem Blattwinkel ($\alpha$) verstellbaren, eine Rotorblattebene überstreichende Rotorblättern (108), vorbereitet zum Erfassen einer äquivalenten Windgeschwindigkeit ($V_{Wind}$) der Rotorblattebene, umfassend

- ein Leistungsbeobachtungsmittel (2), vorbereitet zum Bestimmen einer elektrischen in der Windenergieanlage verfügbaren internen Leistung ($P_{ava,DC}$) in Abhängigkeit einer erfassten elektrischen Leistung ($P_{DC}$) und einer erfassten Drehzahl ($\omega$) des Rotors (106) und
- ein Windbeobachtermittel (4), vorbereitet zum Bestimmen der äquivalenten Windgeschwindigkeit ($V_{Wind}$) in Abhängigkeit der bestimmten internen Leistung ($P_{ava,DC}$) und der erfassten Drehzahl ($\omega$), wobei der Windbeobachter (4) als Eingangsgrößen
- die bestimmte verfügbare interne Leistung ($P_{ava,DC}$) zuzüglich erfasster oder bestimmter Generatorverluste ($P_{VGen}$),
- die erfasste Drehzahl ($\omega$) und
- wenigstens einen Blattwinkel ($\alpha$)
erhält und außerdem oder alternativ das Windbeobachtungsmittel (4) als Ausgangsgrößen
- die äquivalente Windgeschwindigkeit ($V_{Wind}$),
- eine bei optimalem Blattwinkel ($\alpha$) und optimaler Schnelllaufzahl verfügbare Leistung und
- die aktuelle Schnelllaufzahl ($\lambda$)

ausgibt.

9. Windenergieanlage (100) nach Anspruch 8, **dadurch gekennzeichnet, dass** ein Verfahren nach einem der Ansprüche 1 bis 7 ausgeführt wird.

10. Windpark (112) mit wenigstens zwei Windenergieanlagen (100) gemäß Anspruch 8 oder Anspruch 9, für den insbesondere eine Berechnung der insgesamt in das elektrische Versorgungsnetz einzuspeisenden Leistung durch Aufsummierung der durch die Windenergieanlagen jeweils einzeln berechneten Werte erfolgt.

**Claims**

1. A method for determining an equivalent wind speed of a rotor blade plane of a wind power installation (100) with a rotor (106) with rotor blades (108) that are adjustable in terms of their blade angle, said method comprising the steps of:

- determining an electric internal power ($P_{ava,DC}$) available in the wind power installation (100) depending on a captured electric power ($P_{DC}$) and a captured rotational speed ($\omega$) of the rotor (106) and
- determining the equivalent wind speed ($V_{Wind}$) depending on the determined available internal power ($P_{ava,DC}$) and the captured rotational speed ($\omega$), wherein the wind observer (4) obtains
- the determined available internal power ($P_{ava,DC}$) plus captured or determined generator losses ($P_{VGen}$),
- the captured rotational speed ($\omega$) and
- at least one blade angle ($\alpha$)
as input variables and, moreover or alternatively, the wind observation means (4) outputs
- the equivalent wind speed ($V_{Wind}$),
- an available power in the case of an ideal blade angle ($\alpha$) and ideal tip-speed ratio, and
- the current tip-speed ratio (A)

as output variables.

2. The method as claimed in claim 1, **characterized in that**, in the step for determining the equivalent wind speed ($V_{Wind}$),

- at least one blade angle ($\alpha$) of one of the rotor blades (108) is taken into account and, moreover or alternatively,
- generator losses of a generator and, optionally, friction losses of rotating parts and/or power conversion losses of one or more current converters of the wind power installation (100) are taken into account.

3. The method as claimed in claim 1 or 2, **characterized in that**

- a power observer (2) is used to determine the available internal power ($P_{ava,DC}$) and, moreover or alternatively,

- a wind observer (4) is used to determine the equivalent wind speed ($V_{Wind}$).

4. The method as claimed in any one of the preceding claims, **characterized in that** the wind power installation (100) feeds into an electric power grid (120) by means of an inverter having a DC link and the available internal power ($P_{ava,DC}$) denotes the power available at the DC link.

5. The method as claimed in claim 4, **characterized in that**

- the measured rotational speed ($\omega$) of the rotor (106) and
- the electric power ($P_{DC}$) fed into the DC link

are used as input variables for determining the available internal power ($P_{ava,DC}$) or as input variables for the power observer (2).

6. The method as claimed in any one of the preceding claims, **characterized in that** the, or a, power observer (2) used for establishing the available internal power ($P_{ava,DC}$) is defined by the structure:

$$\begin{bmatrix} \dot{\hat{\boldsymbol{\omega}}} \\ \dot{\hat{\boldsymbol{T}}}_{mech} \end{bmatrix} = \begin{bmatrix} -k_\omega & \frac{1}{J} \\ -k_T & 0 \end{bmatrix} \begin{bmatrix} \hat{\omega} \\ \hat{T}_{mech} \end{bmatrix} + \begin{bmatrix} k_\omega & -\frac{1}{J} \\ k_T & 0 \end{bmatrix} \begin{bmatrix} \omega \\ T_{el} \end{bmatrix}$$

where

- J denotes the common moment of inertia of the rotor and generator,
- $\omega$ is the rotational speed of the generator,
- $k_\omega$ and $k_T$ are parameters for influencing the dynamics of the observer,
- $T_{el}$ is referred to as electric torque and calculated as the quotient of power $P_{DC}$ fed into a, or the, electrical temporary storage and the rotational speed $\omega$ and
- $T_{mech}$ denotes the mechanical torque of the rotor and the generator, wherein

the observed variables are denoted by a ^ sign, derivatives in time are denoted by a dot and the available power to be established is calculated as a product of the observed rotational speed $\hat{\omega}$ and observed mechanical torque $\hat{T}_{mech}$.

7. The method as claimed in any one of the preceding claims, **characterized in that** a power ($P_{ava,DC}$) that can be taken out of the wind overall and that is available to be fed into a, or the, electric power grid (120) is established from the determined equivalent wind speed ($V_{Wind}$).

8. A wind power installation (100) having a rotor (106) with rotor blades (108) that are adjustable in terms of their blade angle ($\alpha$) and that pass over a rotor blade plane, prepared to capture an equivalent wind speed ($V_{Wind}$) of the rotor blade plane, comprising

- a power observation means (2), prepared to determine an electric internal power ($P_{ava,DC}$) available in the wind power installation depending on a captured electric power ($P_{DC}$) and a captured rotational speed ($\omega$) of the rotor (106), and
- a wind observer means (4), prepared to determine the equivalent wind speed ($V_{Wind}$) depending on the determined internal power ($P_{ava,DC}$) and the captured rotational speed ($\omega$), wherein the wind observer (4) obtains
- the determined available internal power ($P_{ava,DC}$) plus captured or determined generator losses ($P_{VGen}$),
- the captured rotational speed ($\omega$) and
- at least one blade angle ($\alpha$)
as input variables and, moreover or alternatively, the wind observation means (4) outputs
- the equivalent wind speed ($V_{Wind}$),
- an available power in the case of an ideal blade angle ($\alpha$) and ideal tip-speed ratio, and
- the current tip-speed ratio (A)

as output variables.

9. The wind power installation (100) as claimed in claim 8, **characterized in that** the method as claimed in any one of claims 1 to 7 is carried out.

**10.** A wind farm (112) having at least two wind power installations (100) as claimed in claim 8 or claim 9, for which, in particular, there is a calculation of the entire power to be fed into the electric power grid by summing the values calculated individually in each case by the wind power installations.

**Revendications**

**1.** Procédé servant à définir une vitesse de vent équivalente d'un plan de pale de rotor d'une éolienne (100) avec un rotor (106) avec des pales de rotor (108) pouvant être ajustées selon leur angle de pale, comprenant les étapes :

- de définition d'une puissance ($P_{ava,DC}$) interne électrique pouvant être mise à disposition dans l'éolienne (100) en fonction d'une puissance électrique détectée ($P_{DC}$) et d'une vitesse de rotation ($\omega$) détectée du rotor (106) et
- de définition de la vitesse de vent ($V_{vent}$) équivalente en fonction de la puissance ($P_{ava,DC}$) interne pouvant être mise à disposition définie et de la vitesse de rotation ($\omega$) détectée,

dans lequel l'observateur de vent (4) reçoit en tant que grandeurs d'entrée
- la puissance ($P_{ava,DC}$) interne pouvant être mise à disposition définie plus les pertes de générateur ($P_{VGen}$) détectées ou définies,
- la vitesse de rotation ($\omega$) détectée, et
- au moins un angle de pale ($\alpha$)
et par ailleurs ou en variante le moyen d'observation du vent (4) envoie en tant que grandeurs de sortie
- la vitesse de vent (Vvent) équivalente,
- une puissance pouvant être mise à disposition dans le cas d'un angle de pale ($\alpha$) optimal et d'une vitesse de rotation en bout de pale optimale, et
- la vitesse de rotation en bout de pale ($\lambda$) instantanée.

**2.** Procédé selon la revendication 1, **caractérisé en ce que** lors de l'étape de définition de la vitesse de vent (Vvent) équivalente,

- au moins un angle de pale ($\alpha$) d'une des pales de rotor (108) est pris en compte et par ailleurs ou en variante
- des pertes de générateur d'un générateur, ainsi qu'en option des pertes par friction de pièces rotatives et/ou des pertes de transformation de puissance d'un ou de plusieurs transformateurs de courant de l'éolienne (100) sont prises en compte.

**3.** Procédé selon la revendication 1 ou 2, **caractérisé en ce que**
est utilisé

- pour définir la puissance ($P_{ava,DC}$) interne pouvant être mise à disposition, un observateur de puissance (2) et par ailleurs ou en variante
- pour définir la vitesse de vent (Vvent) équivalente, un observateur de vent (4).

**4.** Procédé selon l'une quelconque des revendications précédentes, **caractérisé en ce que** l'éolienne (100) injecte au moyen d'un onduleur présentant un circuit intermédiaire à tension continue une puissance électrique dans un réseau d'alimentation (120) électrique et la puissance ($P_{ava,DC}$) interne pouvant être mise à disposition désigne la puissance pouvant être mise à disposition au niveau du circuit intermédiaire à tension continue.

**5.** Procédé selon la revendication 4, **caractérisé en ce que**

- la vitesse de rotation ($\omega$) mesurée du rotor (106) et
- la puissance ($P_{DC}$) électrique injectée dans le circuit intermédiaire à tension continue

sont utilisées en tant que grandeurs d'entrée pour définir la puissance ($P_{ava,DC}$) interne pouvant être mise à disposition ou sont utilisées en tant que grandeurs d'entrée pour l'observateur de puissance (2).

**6.** Procédé selon l'une quelconque des revendications précédentes, **caractérisé en ce que** le ou un observateur de puissance (2) utilisé pour déterminer la puissance ($P_{ava,DC}$) interne pouvant être mise à disposition est défini par la structure :

$$\begin{bmatrix} \dot{\hat{\omega}} \\ \dot{\hat{T}}_{mech} \end{bmatrix} = \begin{bmatrix} -k_\omega & \frac{1}{J} \\ -k_T & 0 \end{bmatrix} \begin{bmatrix} \hat{\omega} \\ \hat{T}_{mech} \end{bmatrix} + \begin{bmatrix} k_\omega & -\frac{1}{J} \\ k_T & 0 \end{bmatrix} \begin{bmatrix} \omega \\ T_{el} \end{bmatrix}$$

dans laquelle

- J désigne le couple d'inertie commun du rotor et du générateur,
- $\omega$ est la vitesse de rotation du générateur,
- $k_\omega$ et $k_T$ sont des paramètres servant à influencer la dynamique de l'observateur,
- $T_{el}$ est désigné comme couple de rotation électrique et est calculé sous la forme de quotient d'une puissance $P_{DC}$ injectée dans un ou l'accumulateur intermédiaire électrique et la vitesse de rotation $\omega$, et
- $T_{mech}$ désigne le couple de rotation mécanique du rotor et du générateur, dans lequel

les grandeurs observées sont marquées par un caractère ^, des déviations dans le temps par un point et la puissance pouvant être mise à disposition à déterminer est calculé en tant que produit de la vitesse de rotation $\hat{\omega}$ observée et du couple de rotation $\hat{T}_{mech}$ mécanique observée.

7. Procédé selon l'une quelconque des revendications précédentes, **caractérisé en ce qu'**une puissance ($P_{ava,DC}$) pouvant être prélevée au total du vent et pouvant être mise à disposition pour être injectée dans un ou le réseau d'alimentation (120) électrique est déterminée à partir de la vitesse de vent ($V_{Vent}$) équivalente définie.

8. Eolienne (100) avec un rotor (106) avec des pales de rotor (108) pouvant être ajustées dans leur angle de pale ($\alpha$), balayant un plan de pale de rotor, préparée pour détecter une vitesse de vent ($V_{Vent}$) équivalente du plan de pale de rotor, comprenant

- un moyen d'observation de puissance (2) préparé pour définir une puissance ($P_{ava,DC}$) interne électrique pouvant être mise à disposition dans l'éolienne en fonction d'une puissance ($P_{DC}$) électrique détectée et d'une vitesse de rotation ($\omega$) détectée du rotor (106),
- un moyen d'observation de vent (4) préparé pour définir la vitesse de vent (Vvent) équivalente en fonction de la puissance ($P_{ava,DC}$) interne définie et de la vitesse de rotation ($\omega$) détectée, dans lequel l'observateur de vent (4) reçoit en tant que grandeurs d'entrée
- la puissance ($P_{ava,DC}$) interne pouvant être mise à disposition définie plus les pertes de générateur ($P_{VGen}$) détectées ou définies,
- la vitesse de rotation ($\omega$) détectée et
- au moins un angle de pale ($\alpha$),
et par ailleurs ou en variante le moyen d'observation de vent (4) envoie en tant que grandeurs de sortie
- la vitesse de vent (Vvent) équivalente,
- une puissance pouvant être mise à disposition en cas d'angle de pale ($\alpha$) optimal et de vitesse de rotation en bout de pale optimale, et
- la vitesse de rotation en bout de pale ($\lambda$) instantanée.

9. Eolienne (100) selon la revendication 8, **caractérisée en ce qu'**un procédé selon l'une quelconque des revendications 1 à 7 est exécuté.

10. Parc éolien (112) avec au moins deux éoliennes (100) selon la revendication 8 ou la revendication 9, pour lequel en particulier un calcul de la puissance à injecter au total dans le réseau d'alimentation électrique est effectué en additionnant les valeurs calculées respectivement invidiuellement par les éoliennes.

EP 3 420 226 B1

Fig. 1

Fig. 2

Fig. 3

EP 3 420 226 B1

Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20110204635 A1
- DE 102010014165 A1

**In der Beschreibung aufgeführte Nicht-Patentliteratur**

- **K. E. JOHNSON ; L. Y. PAO ; M. J. BALAS ; L. J. FINGERSH.** Control of Variable-Speed Wind Turbines - Standard and Adaptive Techniques for Maximizing Energy Capture. *IEEE Control Systems Magazine,* Juni 2006, 70-81
- **M. N. SOLTANI ; T. KNUDSEN ; M. SVENSTRUP ; R. WISNIEWSKI ; P. BRATH ; R. ORTEGA ; K. JOHNSON.** Estimation of Rotor Effective Wind Speed: A Comparison. *IEEE Transactions on Control Systems Technology,* Juli 2013, vol. 21 (4), 1155-1167
- **R. ORTEGA ; F. MACILLA-DAVID ; F. JARAMILLO.** A Globally Convergent Wind Speed Estimator for Windmill Systems. *Proc. 2011 50th IEEE Conference on Decision and Control,* Dezember 2011, 6079-6084
- **C. M. VERRELLI ; A. SAVOIA ; M. MENGONI ; R. MARINO ; P. TOMEI ; L. ZARRI.** On-line Identification of Winding Resistances and Load Torque in Induction Machines. *IEEE Transactions on Control Systems Technology,* Juli 2014, vol. 22 (4